# EUROPEAN PATENT APPLICATION

(11) **EP 1 688 740 A1**
(43) Date of publication of application: **09.08.2006**
(21) Application number: 04798219.4
(22) Date of filing: 04.11.2004
(51) Int. Cl.: G01N 33/483, G01N 1/30

(54) **METHOD AND APPARATUS FOR DETERMINING CELL VIABILITY**

(30) Priority: 05.11.2003 ES 200302654
(71) Applicant: Universidad de Barcelona, 08028 Barcelona (ES)
(72) Inventor: PUIGNOU GARCIA, Lluis, 08028 Barcelona (ES); SANZ JURADO, Ramsés, 08028 Barcelona (ES); GALCERAN HUGUET M. Teresa, 08028 Barcelona (ES)
(74) Representative: Aragones Forner, Rafael Angel
(86) International application number: PCT/ES2004/000492
(87) International publication number: WO 2005/045425

(57) **Abstract**

Method and apparatus for the determination of cell viability.

The invention comprises a method for the determination of the cell viability and an apparatus specially designed for the application of this method. The method uses gravitational field flow fractionation (GrFFF) with fluorescence detection technique, and it is suitable for commercial yeast strains. It works properly as proved by comparing GrFFF cell viability values with those 10 obtained using flow cytometry and coulter counter techniques. It provides good linearity, repeatability, and detection limit low enough to detect 2 x 10⁴ non-viable cells. Moreover, GrFFF can be easily implemented in a typical liquid chromatographic system. Thus, the ease and low-cost of the apparatus makes it a valuable alternative to commercial ones based in flow cytometry 15 and Coulter counter techniques.

## Description

This invention relates to the field of cell analysis and in particular to a method and an apparatus for the determination of cell viability.

### BACKGROUND ART

In recent years there have been an increase in the applicability of separation techniques for the characterization of samples ranging from macromolecules to micro-sized particles such as cells. One of the most versatile elution-driven separation techniques applied for the characterization of these samples is field flow fractionation (FFF) (cf. J.C. Giddings et al., "Field-Flow Fractionation-analysis of macromolecular, colloidal, and particulate materials", Science 1993, vol. 260, pp.1456-1465).

FFF allows the separation of the sample components inside a narrow, ribbon-like channel, placed on a typical liquid chromatographic system. The channel comprises two plane parallel plates which undergo the action of a perpendicular externally generated field. A laminar flow, generated by a highpressure pump when passing through the channel, creates a parabolic flow profile in the channel thickness. Different interactions of the sample components with the external field allow to concentrate or drive these components toward one plate in carrier flow streamlines of different velocities. The migration along the channel of sample components at different velocities produces the separation.

Different types of FFF techniques can be distinguished according to the nature of the applied external field. One of these techniques is gravitational field flow fractionation (GrFFF), a sedimentation FFF type that employs the Earth's gravitational field applied perpendicularly to the channel. Over the years, GrFFF has been shown to be suitable for the characterization of various micrometer-size particles of different origin, and for living samples. This technique is very advantageous for cell sorting and posterior characterization, due to its simplicity, reduced risk of sample degradation and low cost.

In several areas of the food industry, yeasts are frequently used in fermentation processes such as baking, beer brewing, and the production of diary products and wine. New methodologies have recently been developed for the characterization of commercial active dry wine yeast using field flow fractionation (cf. e.g. R. Sanz et al., "Gravitational Field-Flow Fractionation for the characterisation of active dry wine yeast", J. Chromatogr. A 2001, vol. 919, pp. 339-347). The most important improvements in the yeast industry are related to the developing of selected yeast strains. In winemaking, the transformation of grape juice into wine is essentially a microbial process because yeasts, usually of the genus 5 Saccharomyces, generally conduct the alcoholic fermentation. In order to monitor the performance of yeast-based fermentations, a quality assessment of the yeast is needed and, consequently, an evaluation of the yeast cell viability is required. Several methods have been used for the determination of the cell viability, such as the methylene blue staining and the assessment of colony forming units (cf. e.g. R. Seward et al., "The effects of ethanol, hexan-1-ol, and 2-phenylethanol on cider yeast growth, viability, and energy status; synergistic inhibition", 10 J. Inst. Brew. 1996, vol. 102, pp. 439-443). However, these methods are laborious, involve long analysis time and are limited by subjectivity.

In the area of wine production and brewing industry, new methods for the determination of yeast viability in fermentation processes based on flow cytometry (FC) have recently been proposed (cf. P. Malacrino et al., "Rapid detection of viable yeasts and bacteria in wine by flow cytometry", J. Micobiol. Methods 2001, vol. 45, pp. 127-134; M. Bouix et al., "Rapid assessment of yeast viability and yeast vitality during alcoholic fermentation", J. Inst. Brew. 2001, vol. 107, pp. 217-225). These methods are rapid and a lot of information can be obtained. Nevertheless, flow cytometry is an expensive technique and requires a laborious equipment maintenance.

Methods based on dielectrophoretic separation combined with FFF have also been applied for continuous separation of viable and non-viable yeast cells, but they have the drawback that a sophisticated equipment is needed (cf. G.H. Markx et al., "Dielectrophoretic separation of cells: continuous separation", Biotechnology and Bioengineering 1995, vol. 45, pp. 337-343).

More recently, a capillary electrophoresis method for the determination of cell viability of different microbes has also been proposed (cf. Daniel W. Armstrong et al., "Determination of Cell Viability in Single or Mixed Samples Using Capillary Electrophoresis Laser-Induced Fluorescence Microfluidic Systems", Analytical Chemistry 2001, vol. 73, pp. 4551-4557). Nevertheless, some expensive equipment and long analyses time for yeast samples are required. Thus, it would be highly desirable to have a more economical and simple technique to determine cell viability, which avoid or minimize some of the inconveniences above mentioned.

### SUMMARY OF THE INVENTION

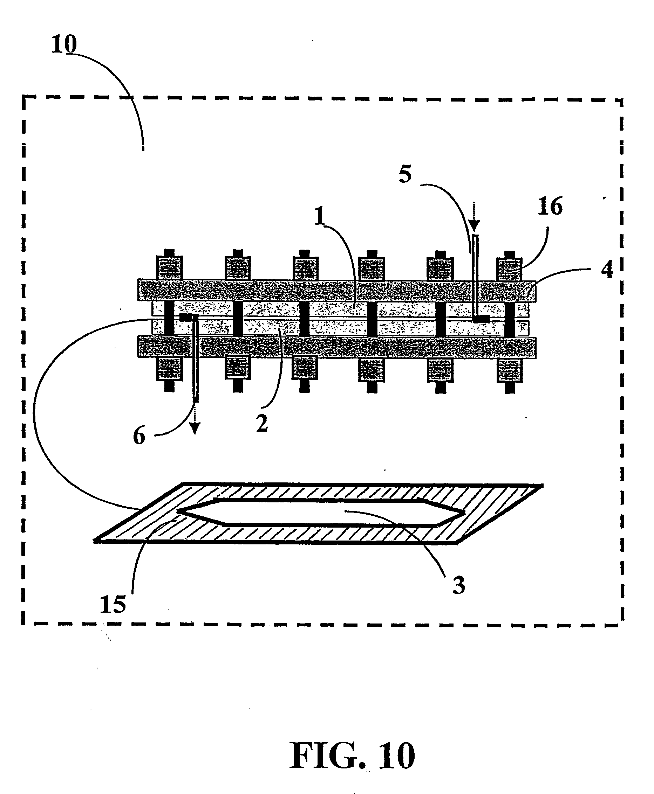

The present invention provides a method and an apparatus specifically designed for using this method, which overcome some of the problems found in the current art. In the invention great accuracy and simplicity are combined while maintaining a low cost. Thus, as a part of the present invention it is provided a new method of determining cell viability using gravitational field flow fractionation with fluorescence detection, which comprises the steps of: a) dispersing a sample containing said cells in a carrier liquid and staining the cells with a detectable fluorescence probe; b) injecting the treated sample into the gravitational field flow fractionation setup 10 (cf. FIG.10); c) detecting the cells by measuring the fluorescence emitted; and d) processing emission data to determine the number of viable cells.

In a preferred embodiment, the sample is dispersed in a carrier liquid by sonication. Preferably, the carrier liquid is a buffered saline solution, and more preferably, it is a phosphate buffered saline solution (PBS). The carrier liquid is also used as mobile phase. In another preferred embodiment, the method of the present invention uses propidiun iodide (PI), fluorescein diacetate (FDA), carboxy-fluorescein diacetate (cFDA), calcein, or SYTO 13, a well-known greenfluorescent nucleic acid dye (cf. R.P. Haughland, "Nucleic acid detection"; In M.T.Z. Spence (ed.), "Handbook of fluorescent probes and research chemicals", Molecular Probes, Inc., Eugene, Oregon, US, 1996, pp.143-168) as fluorescence probes. The most preferred fluorescence probe is propidium iodide.

In another preferred embodiment, the gravitational field flow fractionation setup 10 used for carrying out the method of the invention comprises: a) two parallel plates 35 1 and 2, separated by a sheet 15 where an inner channel 3 is located, and clamped together with a rigid and non-deformable frame; b) a channel inlet 5; and c) a channel outlet 6.

In another preferred embodiment, the processing of the emission data is done with a calibration curve. Preferably, the calibration curve is obtained by plotting peak area versus concentration of non-viable cells corresponding to several standard solutions. More preferably, the number of viable cells per gram is calculated using the non-viable cells results and the concentration of the sample solutions in cell number. The concentration data of the sample solutions can be obtained by Coulter counter. Also preferably, the calibration curve is obtained by plotting peak area versus concentration of viable cells corresponding to several standard solutions. More preferably, the number of viable cells per gram is directly obtained from the calibration curve. Even more preferably, the standard solutions have well-established cell viability. Still even more preferably, the cell viability of the standard solutions is determined by combining flow cytometry and Coulter counter techniques. Accurate cell viability results are obtained using both calibration curves, without significant differences between them.

In a specific embodiment of the present invention, the cells are yeast cells. In another specific embodiment the cells are bacteria cells. The suitability of the new method was tested with several commercial yeast strains. The validation of the method was performed by comparing GrFFF viability values with those obtained using flow cytometry/Coulter counter techniques. Accurate linearity (0.15-6 g/l), good repeatability (relative standard deviation (RSD): 2.4%) and detection limit low enough to detect 2 x10⁴ non-viable cells were obtained.

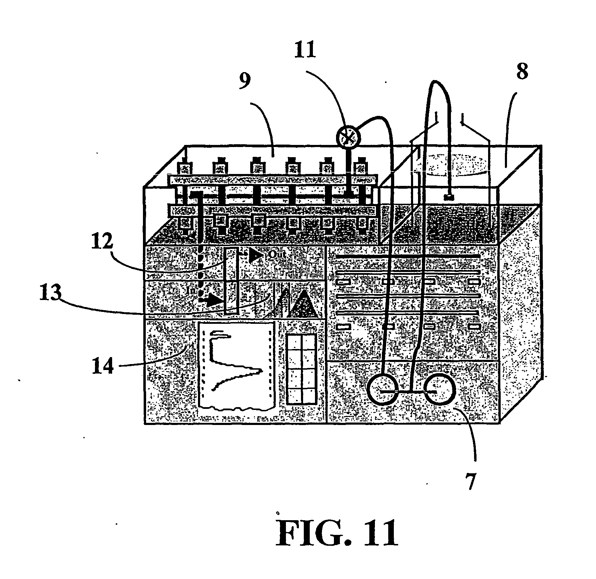

The method of the present invention can be carried out with an apparatus that permits the determination of cell viability, the apparatus being also subject-matter of the invention. The apparatus is illustrated by the example of FIG.11 and it has the following parts: a) a pump system 7; b) a carrier liquid reservoir compartment 30 8; c) a chamber 9 which contains the gravitational field flow fractionation setup 10; d) an injection system to introduce the sample and the carrier liquid 11; e) a fluorescence detection system comprising a flow cell 12 and a fluorescence detector 13; and f) an acquisition and treatment data system 14 to obtain cell viability results.

The gravitational field flow fractionation setup 10 comprises: a) two parallel of a fluorescence detection system. plates 1 and 2, separated by a band where a sheet 15 with an inner channel 3 is located, and clamped together with a rigid and a non-deformable frame; b) a channel inlet 5; and c) a channel outlet 6. Preferably, the plates 1 and 2 are made of plastic and the sheet 15 is made of polyester, polystyrene or teflon. Also preferably, the rigid and non-deformable frame is formed by several longitudinal bars 4 and several transverse bars 16. More preferably, the longitudinal bars 4 and the transverse bars 16 of the frame are made of aluminium since a more homogeneous distribution around the channel contour is obtained when the channel is tightened up. Even more preferably, the channel outlet 6 is connected to a flow cell 12 of a fluorescence detection system.

The use of gravitational field flow fractionation with fluorescence detection to determine cell viability has the advantage of being much more economic and simple than other techniques known in the art. Moreover, GrFFF can be easily 15 implemented in a typical liquid chromatographic system. It can be also applied to any type of yeast and it is non-destructive. Thus, the ease and low-cost of the manufacture of the apparatus of the present invention makes it a valuable alternative to commercial ones based in FC.

Throughout the description and claims the word "comprise" and variations of the word, are not intended to exclude other technical features, additives, components, or steps. The abstract of this application is incorporated herein as reference. Additional objects, advantages and features of the invention will become apparent to those skilled in the art upon examination of the description or may be learned by practice of the invention. The following examples and drawings are provided by way of illustration, and they are not intended to be limiting of the present invention.

### BRIEF DESCRIPTION OF THE DRAWINGS

FIG. 1 is a flow cytometry pattern obtained for a yeast standard (1.40 g/l) using FDA and PI as staining probes. X-axis shows the FDA response (viable cells) and Y-axis shows the PI response (non-viable cells).
FIG. 2 is a calibration curve of a yeast standard solution. The Y-axis represents the peak area (PA) and the X-axis the concentration of non-viable cells (NVC) of the standard, which ranges from 0.2 g/l to 4 g/l.
FIG. 3 is a flow cytometry pattern obtained for Enoferm BDX yeast strain. 5 10 15 20
FIG. 4 is a flow cytometry pattern obtained for Uvaferm ALB yeast strain.
FIG. 5 is a flow cytometry pattern obtained for Uvaferm BC yeast strain.
FIG. 6 is a GrFFF fractogram obtained for a Enoferm BDX yeast strain
FIG. 7 is a GrFFF fractogram obtained for a Uvaferm ALB yeast strain.
FIG. 8 is a GrFFF fractogram obtained for a Uvaferm BC yeast strain.
FIG.9 is a calibration curve of a yeast standard solution. The Y-axes represents the peak area (PA) and the X-axes the concentration of viable cells (VC).
FIG. 10 is a general scheme of the GrFFF setup 10.
FIG. 11 is a general scheme of the instrumentation system.

### DETAILED DESCRIPTION OF PARTICULAR EMBODIMENTS

### Yeast samples:

Samples were commercial active dry wine yeast packaged under vacuum and kept at 4 °C for its good conservation. Twelve types of Saccharomyces were analysed: 30 S. cerevisiae (Intec Red, Intec Cerevisiae, Uvaferm BM45, Uvaferm VRB, Uvaferm BC, Uvaferm ALB, Enoferm BDX, Actiflore, Bourgoblanc), S. bayanus (Intec Bayanus, Enoferm QA23) and S. uvarum (Uvaferm UVA).

### Gravitational field flow fractionation technique (GrFFF)

FIG. 11 shows a scheme of an apparatus according to the present invention. The GrFFF setup employed basically corresponds to the one in FIG. 10. It consists of two plastic plates 1 and 2, separated by a polyester band 15 where the channel 3 is located, and clamped together with an aluminium frame formed by several longitudinal bars 4 and several transverse bars 16. The dimensions of the ribbon-like channel used were 0.0151 cm thick, 2 cm wide and 30 cm long with a total void volume of 831 µl. The injected amount was 20 µl introduced through an injector valve (mod. 7125 Rheodyne, Cotati, CA, USA) with an injection flow of 0.2 ml/min generated by an HPLC pump (mod. 510, Waters, Milford, MA, USA) during 45 seconds. The flow was stopped after the injection time to permit relaxation of the yeast cells; the stopflow time was 2 minutes. The elution flow was 0.2 ml/min. The channel outlet 5 10 6 was connected to a fluorescence detection system comprising a flow cell 12 and a fluorescence detector 13. All experiments were performed using a fluorescence detector (mod. FP-1520, Jasco Corporation, Tokyo, Japan) at gain 100 and attenuation 64. Isotonic phosphate buffered saline (PBS) at pH 7.4 was used as mobile phase. The experiments were done at room temperature.

Sample treatment: The yeast samples were resuspended in PBS at pH 7.4 and sonicated for 2 minutes. Sample concentration ranged from 1 to 3 g/l in agreement with the values currently used in wineries. For staining the yeast with propidium iodide (PI), 960 µl of yeast solution were spiked with 40 µl of a PI solution of 1 mg/ml. Incubation time was 1 minute at room temperature. After this time, the samples were immediately injected into the GrFFF system to be analyzed.

### Flow cytometry technique (FC) used for a comparative assay.

To compare the developed GrFFF method for the estimation of cell viability, analyses of the same yeast type were performed by FC in combination with fluorescent probes. Two specific fluorophores were used, fluorescein diacetate (FDA) and propidium iodide (PI). FDA gives information about viable cells. In contrast, PI gives information of non-viable cell. All the analyses were made using a Coulter Epics® XL (Coulter Corporation, Hialeah, Florida, USA) flow cytometer at an operating pressure of 25,6 x 10 30 35 ³N/m². The flow rate for yeast was maintained lower than 900-1000 events per second, to avoid coincidences. The calibration of the instrument consists of an optical alignment based on optimized signal from 10 nm fluorescent beads (Flowcheck, Epics Division, Coulter Corp., Hialeah, FL, USA). Time vs. fluorescence was used as a control of the stability of the instrument. Excitation of the sample was done using a 488 nm air-cooled argon-ion laser at 15 mW power. The instrument was set up with the standard configuration: forward scatter (FS), side scatter (SS), green (525 nm) fluorescence for FDA and red (675 nm) fluorescence for PI were collected.

Red fluorescence emitted by PI was collected through a 675-band pass filter; photomultiplier tube voltage was set up at 886 V. Green fluorescence was collected using a 550 dichroic long pass filter and a 525-band pas filter; photomultiplier tube voltage was set at 654 V. Fluorescence was represented in logarithmic histograms.

Sample treatment: yeast samples were resuspended in phosphate buffered saline (PBS, pH 7.4) to obtain a final concentration of 10⁶ cell/ml. An aliquot of 1 ml of each yeast solution was placed in a test tube, and then FDA was added to each test tube to achieve a final concentration of 10 µg/ml. The incubation time was 10 minutes at room temperature. After that, a PI solution (1 mg/ml) was also added to each test tube to achieve a final concentration of 40 µg/ml. Finally, a 1-minute additional of incubation time at room temperature was applied.

### Coulter counter (CC).

Final concentration of the yeast solutions in cell number was obtained using a coulter counter Multisizer II (Coulter Corp., Hialeah, FL, USA) with 256 channels and using an aperture size of 70 µm. Counted range from 1.4 to 30.1 µm. Instrumental calibration was performed with polystyrene latex of 18.5 µm (Coulter Electronics, Luton, UK) according to the instruction manual of the instrument.

Sample treatment : suspensions of active dry wine yeast from 0.2 to 3.5 g/l in PBS were sonicated for 2 minutes and then diluted 1:1000 with a specific isotonic reagent (Isoton II, Coulter Corp.) previously filtered on 0.2 µm pore filter. The analytical volume was 500 µl and all measurements were performed three times at room temperature.

### Gravitational field flow fractionation calibration method.

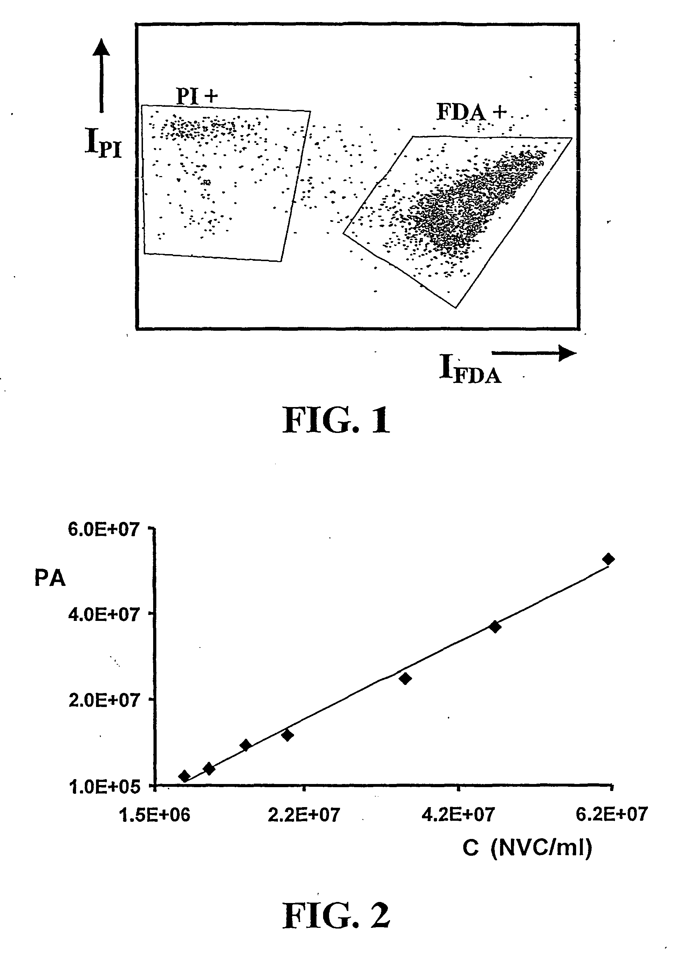

Seven yeast standard solutions were prepared from a Saccharomyces 5 cerevisiae strain at different cell concentrations. The yeast strain used as standard for the calibration was a commercial yeast strain available in an active dry yeast form, Intec Red, and sample concentration ranged from 0.2 to 3.5 g/l within the linearity range of the method (0.15 to 6 g/l). To obtain the cell concentration and the percentage of cell viability two classical techniques were used. For the total cell concentration Coulter counter was used and results were expressed in cell/ml. Then, the same standard was stained with FDA and PI to obtain the percentage of cell viability by flow cytometry. As an example, FIG. 1 shows the FC pattern obtained for a standard solution of Intec Red (1.40 g/l) in 2-D (x-axis, FDA response and y-axis, PI response). On the left is the positive region for PI stained cells and on the right the positive region for FDA stained cells. For Intec Red a 62.2% of viability was obtained using both probes without significant differences between them. Total non-viable and viable cell/ml were calculated by the combination of the data of the Coulter counter and flow cytometry and the results for each standard are given in 10 15 20 Table1.

GrFFF calibration was performed by injecting into the system the seven yeast standard solutions after staining with PI. GrFFF allowed an efficient separation of the fluorescent dead volume preventing the interference of the fluorophore excess in the sample matrix. FDA was not used as GrFFF fluorophore probe because it was not stable enough in the mobile phase. A high signal due to the hydrolysis of FDA prevented the detection of the stained cells. Peak areas of the fractograms obtained by GrFFF with PI probe were obtained and plotted against non-viable cells, calculated from FC and CC as commented above, in a X,Y-chart obtaining the calibration curve of the GrFFF system. Peak area values are also given in 25 30 Table 1. FIG. 2 shows the calibration curve obtained for the Intec Red yeast standard.

**Table 1: Data obtained for the calibration of the GrFFF method with Intec Red yeast strain as a standard. PI was used as a staining probe.**

| Intec Red yeast standard | Concentration (g/l) | ***FC*/*CC data*** | | ***GrFFF data*** |
|---|---|---|---|---|
| | | Concentration (viable cells/ml) | Concentration (non-viable cells/ml) | Peak area |
| S1 | 0.2032 | 8.96E+06 | 5.44E+06 | 2.01E+06 |
| S2 | 0.4024 | 1.44E+07 | 8.77E+06 | 3.88E+06 |
| S3 | 0.6040 | 2.27E+07 | 1.38E+06 | 9.31E+06 |
| S4 | 0.8040 | 3.18E+07 | 1.93E+06 | 1.17E+07 |
| S5 | 1.4008 | 5.68E+07 | 3.45E+06 | 2.47E+07 |
| S6 | 2.5024 | 7.61E+07 | 4.62E+06 | 3.67E+07 |
| S7 | 3.4988 | 1.01E+08 | 6.11E+06 | 5.28E+07 |

### Comparative assay using the GrFFF method and the FC method for the determination of cell viability of commercial winemaking yeasts

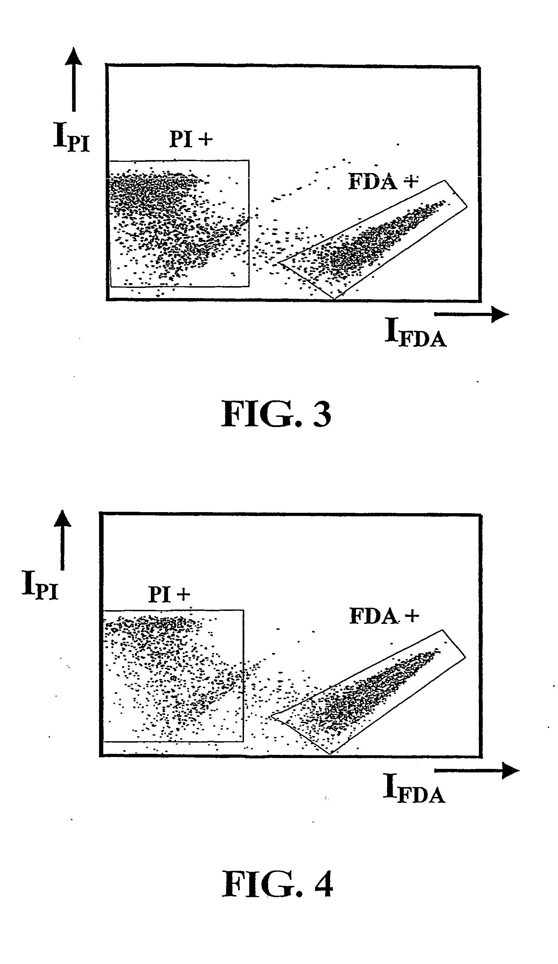

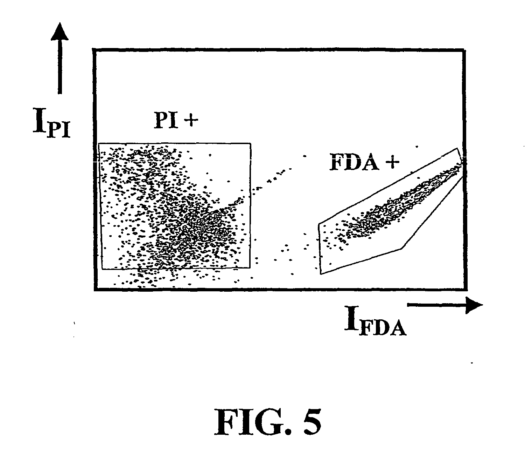

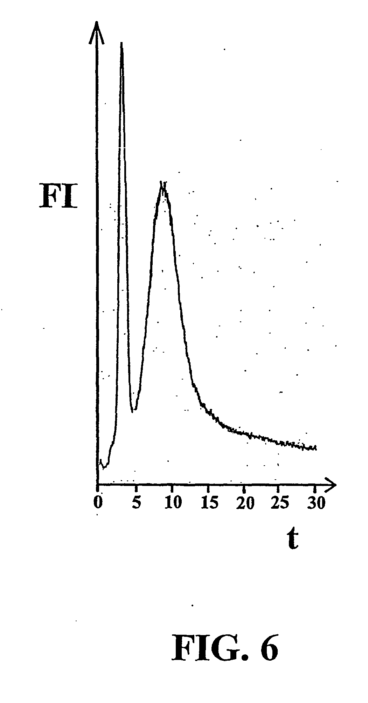

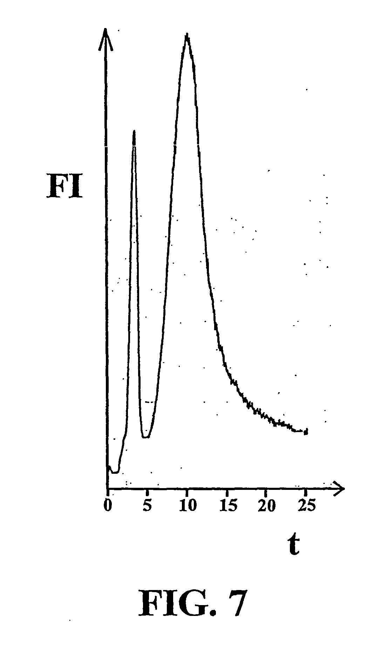

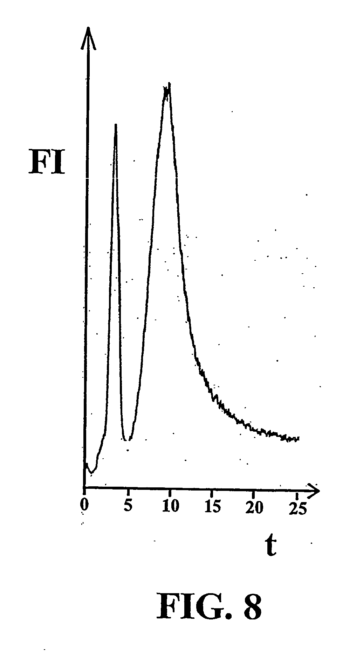

Several samples of different commercial active dry wine yeast, from S. cerevisiae, S. bayanus and S. uvarum with a wide viability range, 19% to 86%, were analyzed using the GrFFF developed method. They also were analyzed by flow cytometry. Eleven commercial yeasts from different Saccharomyces 10 were analyzed. Propidium iodide (PI) was used as a staining probe. Treated samples were injected into the GrFFF channel. FIG. 6, FIG. 7 and FIG. 8 show as an example the fractograms obtained for three commercial yeasts, Enoferm BDX, Uvaferm ALB and Uvaferm BC analyzed by GrFFF. The highest area corresponds to Uvaferm ALB yeast strain and means a high number of stained non-viable cells in the sample. Integration of sample peaks was performed to obtain by external calibration the non-viable cell/g for each sample. Viable cells/g were calculated for each sample using the non-viable results and CC data. Viability results are expressed as viable cells/g. FIG. 3, FIG. 4 and FIG. 5 illustrate the results obtained by FC. Flow cytometry shows the viable cell region (+ FDA) and the non-viable cell region (+ PI). For these samples a viability of 35.9%, 52.8% and 43.8% was respectively obtained. For the total cell concentration Coulter counter was used and results were expressed in cell/ml.

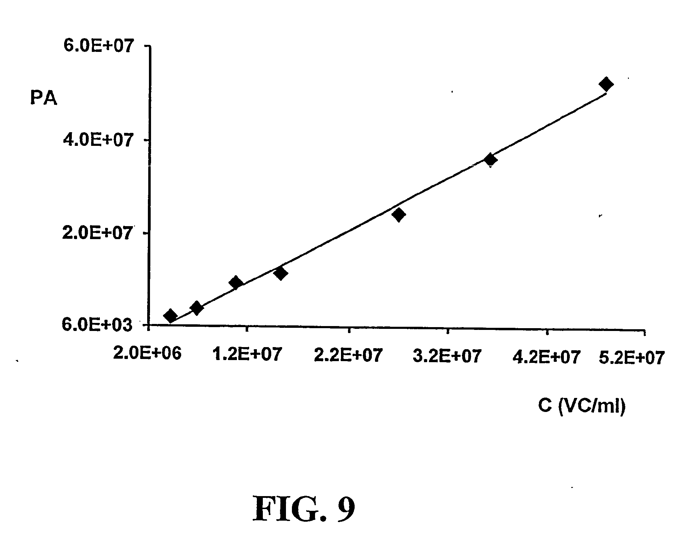

A direct determination by GrFFF of viable cells (VC)/g without using coulter counter data for each sample was also performed. A calibration curve (FIG. 9) with viable cell concentration obtained from FC and CC data for Intec Red standard was used. The results obtained by FC/CC are summarized in Table 2. The results obtained by both methods, GrFFF combined with CC (GrFFF/CC) and direct results from GrFFF, are given in Table 3.

**Table 2: Viable yeast data obtained with the classical flow cytometry method.**

| Yeasts Samples | **Concentration (g/l)** | **Coulter counter data** | **FC/CC data** |
|---|---|---|---|
| | | Concentration (Cells/ml) | **Concentration** (Viable Cells/g) |
| Uvaferm UVA | 3.024 | 4.11E+08 | 6.32E+10 |
| Intec Bayanus | 1.017 | 5.53E+07 | 3.15E+10 |
| Intec Cerevisiae | 1.020 | 5.58E+07 | 3.19E+10 |
| Uvaferm BM 45 | 1.034 | 3.14E+07 | 9.66E+09 |
| Uvaferm VRB | 1.049 | 2.30E+07 | 1.07E+10 |
| Uvaferm BC | 1.162 | 3.16E+07 | 1.44E+10 |
| Uvaferm ALB | 1.347 | 6.78E+07 | 2.20E+10 |
| Enoferm BDX | 1.059 | 4.17E+07 | 1.41E+10 |
| Enoferm QA23 | 2.509 | 3.37E+07 | 2.36E+10 |
| Actiflore | 1.010 | 3.78E+07 | 1.94E+10 |
| Bourgoblanc | 1.095 | 3.96E+07 | 2.97E+10 |

**Table 3: Viable yeast data obtained with the GrFFF method.**

| Yeasts samples | GrFFF data | GrFFF/CC data | GrFFF data |
|---|---|---|---|
| | ***Peak Area*** | Concentration (Viable Cells/g) | Concentration (Viable Cells/g) |
| Uvaferm UVA | 3.31E+07 | 1.17E+11 | 9.50E+10 |
| Intec Bayanus | 2.39E+07 | 2.65E+10 | 3.06E+10 |
| Intec Cerevisiae | 2.47E+07 | 2.61E+10 | 3.14E+10 |
| Uvaferm BM 45 | 4.65E+06 | 1.95E+10 | 6.90E+09 |
| Uvaferm VRB | 4.87E+06 | 1.10E+10 | 6.99E+09 |
| Uvaferm BC | 2.37E+07 | 1.13E+10 | 2.13E+10 |
| Uvaferm ALB | 3.19E+07 | 2.17E+10 | 2.41E+10 |
| Enoferm BDX | 1.88E+07 | 1.54E+10 | 1.92E+10 |
| Enoferm QA23 | 1.13E+07 | 1.11E+10 | 1.74E+10 |
| Actiflore | 6.59E+06 | 2.62E+10 | 1.26E+10 |
| Bourgoblanc | 5.31E+06 | 2.43E+10 | 2.20E+10 |

### Validation of the method

In order to validate the GrFFF method for the determination of viability of yeast cells, repeatability and limit of detection expressed as number of non-viable cells per ml were calculated. Statistical comparison was carried out between the results obtained analyzing eleven different yeast strains using GrFFF and FC, both combined with CC, and direct results from GrFFF. First, the repeatability of the measurements with GrFFF, CC and FC was established by performing five consecutive analyses of a sample of Intec Red chosen as standard. The best repeatability was obtained for CC (0.5 % RSD) and similar values were obtained for FC and GrFFF, 2.5% RSD and 2.4% RSD, respectively. These results show that both methods, the reference method (FC) and the new method (GrFFF), would provide results with the same uncertainty (2.5% RSD) for the determination of non-viable cells.

The limit of detection of the proposed GrFFF method, expressed as non-viable cells, was calculated from the calibration curve as the lowest level of concentration that gave an area equal to the intercept value plus three times the estimated standard deviation. The obtained value was 10⁶ non-viable cells/ml, corresponding to 2 x 10⁴ cells injected into the GrFFF setup. Two statistical tests, paired t-test and analysis of variance (ANOVA two-factor without replication) were applied to compare both analytical methods. For paired t-test calculated t (n = 11) was 0.47, which was lower than t critical value (0.05, 11), 2.23. Moreover, the ANOVA calculated F value for the methods was 0.22, in contrast to the F critical value, which was 4.96. Both statistical tests indicated that no significant differences occurred at 95% confidence level between results obtained using GrFFF and FC/CC. 5

To compare direct GrFFF results and those obtained using FC/CC, the same statistical tests were applied. The statistical analysis of the results, paired t-test (t 10 calculated 0.68, t critical value 2.23), ANOVA (F critical 4.96, F calculated 0.46) showed that there are no significant differences between the GrFFF simplified procedure and the reference FC/CC method.

## Claims

1. A method of determining cell viability using gravitational field flow fractionation with fluorescence detection, comprising the steps of:
a) dispersing a sample containing said cells in a carrier liquid and staining the cells with a detectable fluorescence probe;
b) injecting the treated sample into a gravitational field flow fractionation setup (10); 10 15 20 25 30
c) detecting the cells by measuring the fluorescence emitted; and
d) processing the emission data to determine the number of viable cells.

2. The method according to claim 1, wherein the dispersing of the sample in the carrier liquid is done by sonication.

3. The method according to claim 2, wherein the carrier liquid is a buffered saline solution.

4. The method according to claim 3, wherein the buffered saline solution is a phosphate buffered saline solution.

5. The method according to any of the claims 1-4, wherein the fluorescence probe is selected from the group consisting of propidium iodide, fluorescein diacetate, carboxyfluorescein diacetate, calcein and SYTO 13.

6. The method according to claim 5, wherein the fluorescence probe is propidium iodide.

7. The method according to claim 1, wherein the gravitational field flow fractionation setup (10) comprises:
a) two parallel plates (1) and (2), separated by a band where a sheet (15) with an inner channel (3) is located, and clamped together with a rigid and non-deformable frame;
b) a channel inlet (5); and
c) a channel outlet (6).

8. The method according to claim 7, wherein the plates (1) and (2) are made of plastic.

9. The method according to claim 7, wherein the sheet (15) is made of a material selected from the group consisting of polyester, polystyrene and teflon.

10. The method, according to claim 7, wherein the rigid and non-deformable frame is formed by several longitudinal bars (410) and several transverse bars (16).

11. The method according to claim 10, wherein the longitudinal bars (4) and the transverse bars (16) are made of aluminium.

12. The method according to any of the claims 7-11, wherein the channel outlet (6) is connected to a flow cell (12) of a fluorescence detection system.

13. The method according to claim 1, wherein the processing of the emission data is done with a calibration curve.

14. The method according to claim 13, wherein the calibration curve is obtained by plotting peak area versus concentration of non-viable cells corresponding to several standard solutions.

15. The method according to claim 14, wherein the number of viable cells per gram is calculated using the non-viable cell results and the concentration of the sample solutions expresed as cell number.

16. The method according to claim 13, wherein the calibration curve is obtained by plotting peak area versus concentration of viable cells corresponding to several standard solutions.

17. The method according to claim 16, wherein the number of viable cells per gram is directly obtained from the calibration curve.

18. The method according to any of the claims 14-17, wherein the standard solutions have a well-established cell viability.

19. The method according to claim 18, where the cell viability of the standard solutions are determined by combining flow cytometry and Coulter counter techniques.

20. The method according to claim 1, wherein the cells are yeast cells.

21. The method according to claim 1, wherein the cells are bacteria cells.

22. An apparatus for the determination of cell viability, comprising:
a) a pump system (7);
b) a carrier liquid reservoir compartment (8);
c) a chamber (9) which contains a gravitational field flow fractionation setup (1015);
d) an injection system to introduce the sample and the carrier liquid (11);
e) a fluorescence detection system comprising a flow cell (12) and a fluorescence detector (13); and
f) an acquisition and treatment data system (14) to obtain the cell viability results.

23. The apparatus according to claim 21, wherein the gravitational field flow fractionation setup (10) comprises:
a) two parallel plates (1) and (2), separated by a band where a sheet (15) with an inner channel (3 25) is located, and clamped together with a rigid and non- deformable frame;
b) a channel inlet (5); and
c) a channel outlet (6).

24. The apparatus according to claim 23, wherein the plates (1) and (2) are made of plastic.

25. The apparatus according to claim 23, wherein the sheet (15) is made of a material selected from the group consisting of polyester, polystyrene and teflon.

26. The apparatus according to claim 23, wherein the rigid and non-deformable frame is formed by several longitudinal bars (4) and several transverse bars (16).

27. The apparatus according to claim 26, wherein the longitudinal bars (4) and transverse bars (16 5) are made of aluminium.

28. The apparatus according to any of the claims 23-27, wherein the channel outlet (6) is connected to a flow cell (12) of a fluorescence detection system.

29. A gravitational field flow fractionation setup (10) for carrying out the method of the claim 1 and for the integration in the apparatus of claim 21 which comprises:
a) two parallel plates (1) and (2), separated by a band where a sheet (15) with an inner channel (3) is located, and clamped together with a rigid and non-deformable frame;
b) a channel inlet (5); and
c) a channel outlet (6).

30. The gravitational field flow fractionation setup according to claim 29, wherein the plates (120) and (2) are made of plastic.

31. The gravitational field flow fractionation setup according to claim 29, wherein the sheet (15) is made of a material selected from the group consisting of polyester, polystyrene and teflon.

32. The gravitational field flow fractionation setup according to claim 29, wherein the rigid and non-deformable frame is formed by several external bars (4) and several transverse bars (16).

33. The gravitational field flow fractionation setup according to claim 32, wherein the longitudinal bars (4) and transverse bars (16) are made of aluminium.

34. The gravitational field flow fractionation setup according to any of the claims 29-33, wherein the channel outlet (635) is connected to a flow cell (12) of a fluorescence detection system.
